# EUROPÄISCHE PATENTSCHRIFT

(11) **EP 0 968 981 B1**
(45) Veröffentlichungstag und Bekanntmachung des Hinweises auf die Patenterteilung: **05.10.2011**
(21) Anmeldenummer: 99112213.6
(22) Anmeldetag: 25.06.1999
(51) Int. Cl.: C05D 5/00, C05D 9/02, C05F 11/00, C05G 3/00

(54) **Mikronährstoffhaltiger Blattdünger auf Basis von Magnesiumsulfat und Verfahren zur seiner Herstellung**
Micronutrient foliar fertilizer based on magnesium sulphate and process for obtaining thereof
Engrais foliaire contenant des microéléments à base de sulfate de magnésium et son procédé d'obtention

(30) Priorität: 04.07.1998 DE 19829919
(43) Veröffentlichungstag der Anmeldung: 05.01.2000
(73) Patentinhaber: K+S KALI GmbH, 34131 Kassel (DE)
(72) Erfinder: Wiechens, Bernhard, Dr., 31189 Giesen-Hasede (DE)
(74) Vertreter: Walther, Robert

(56) Entgegenhaltungen:
- WO-A-91/09818
- US-A- 5 395 418
- US-A- 5 492 553

## Beschreibung

Pflanzenkulturen benötigen neben den bekannten Makronährstoffen (N, P, K) für eine optimale Entwicklung weitere Nährstoffe, insbesondere die Sekundärnährstoffe Mg, und S. Die Sekundärnährstoffe Mg und S werden häufig in gelöster Form als Bittersalzlösung (MgSO₄ . 7H₂O mit 16 % MgO und 13 % S) als Blattdünger appliziert.

In der landwirtschaftlichen Praxis gilt heute die Blattdüngung mit Bittersalz als "gute fachliche Praxis", um zeitlich bedingte Mangelsituationen mit diesen Nährstoffen über eine Direktapplikation auf das Blatt mit relativ geringen Nährstoffmengen sofort und ohne große Verzögerung zu beheben. Bittersalzanwendung wird vor allem zu Getreide, Zuckerrüben, Raps und Kartoffeln durchgeführt.

Neben den genannten Nährstoffen sind weitere in geringen Mengen wirksame Spurenelemente wie Fe, Mn, Zn, Cu, Co, Mo und B, die sogenannten Mikronährstoffe unentbehrlich. Diese Spurenelemente sind für den Aufbau von Enzymsystemen in pflanzlichen Zellen essentiell und häufig nicht hinreichend verfügbar. Die Unterversorgung mit einem dieser Mikronährstoffe führt durch Mangelkrankheiten an der Pflanze zu Ertragsdepressionen. Der Bedarf an den letztgenannten Elementen steht in unmittelbarem Zusammenhang zur Höhe der Düngung mit Makronährstoffen. Je besser die Pflanzen mit N, P, K, Ca und Mg versorgt sind, um so größer ist der Bedarf an Spurenelementen. Eine Überschreitung der optimalen Dosis kann aber ebenso zu Schäden und Ertragseinbußen führen. (Ullmanns Encyklopädie der technischen Chemie, 4. Auflage 1975, Band 10, S. 206)

Einer gezielten Versorgung mit Mikronährstoffen während des Pflanzenwachstums bedürfen vor allem die Kulturen: Zuckerrüben, Raps und Wein mit Bor und Mangan sowie Getreide und Kartoffeln mit Mangan.

Es ist bekannt, Mikronährstoffdünger als Einspurennährstoffdünger und als Mehrspurennährstoffdünger einzusetzen. Die Nährelemente werden, da es sich überwiegend um Schwermetalle handelt, als Kationen oder Metallchelat aufgenommen. Eine Ausnahme bildet das Bor, das in anionischer Form als Borat aufgenommen wird.

Bekannte Einspurennährstoffdünger sind z.B.
→ Fe als Eisenethylendiamintetraacetat (Fe-EDTA - Handelsprodukt Fetrilon)
→ Mn als Mangansulfat MnSO₄ · 4 H₂O oder MnSO₄ · H₂O
→ Zn als Zinksulfat ZnSO4 · 7H₂O oder ZnSO₄ · H₂O
→ Cu als Kupferchelat
→ Co als Kobaltchelat
→ Mo als Mischung von Natriummolybdat und Ammoniummolybdat
→ B z.B. als Natriumtetraborat oder Borsäure

Die beispielsweise genannten Einspurennährstoffdünger können sämtlich in ihrer wassergelösten Form als Blattdünger eingesetzt werden. (Finck: Dünger und Düngung, Verlag Chemie Weinheim, New York, 1979, S. 93-105 sowie "Das Düngemittelrecht" 1996, S. 90-98, Landwirtschaftsverlag GmbH Münster-Hiltrup)

Bekannt ist des weiteren der Einsatz der genannten Mikronährstoff-Einzeldünger in verschiedenen Kombinationen als Spurennährstoff-Mischdünger. Sie haben den Vorteil eines breiteren Wirkungsspektrums.

Die bekannten Blattdünger mit Spurenelementen in Kombination ihrer Gesamtheit enthalten häufig eine Kombination der wichtigsten Hauptnährstoffe N + K.

Darüber hinaus ist eine wasserlösliche Kombination mehrerer Mikronährstoffe mit den Sekundämährstoffen Magnesium und Schwefel als Blattdünger bekannt. (Finck; a.a. O. S. 125) Dieser Dünger ist eine Weiterentwicklung des bereits genannten Fe-Chelat-Düngers. Der Sekundärnährstoff Mg - als MgO-Gehalt angegeben - wird jedoch nicht in Form von MgSO₄ eingesetzt, so daß die gleichzeitige ausreichende Versorgung mit Schwefel nicht gegeben ist.

In der US-A-5492553 ist ein mikronährstoffhaltiger Blattdünger mit Magnesium, Bor und Mangan als Nährstoffe beschrieben, wobei hier das Magnesium in der Form des Magnesiumsulfats, das Mangan als Mangansulfat und das Bor als Borsäure eingesetzt wird. Der Anteil an Magnesium ist 0 bis 5 %, der an Mangan 0 bis 1 % und der an Bor 0 bis 0,5 %. Der Anteil an Mangansulfat beläuft sich auf 2 bis 40 %, der Anteil an anderen Düngemittelstoffen unter anderem auch Magnesiumsulfat beträgt 0 bis 75 %, der Anteil von Spurenelementen in Form von Sulfaten von 1 bis 40 %. Die US-A-5395418 beschreibt einen ähnlichen mikronährstoffhaltigen Blattdünger, wie die zuvor genannte US-A-5492553.

Aus der WO 91/09818 A ist ebenfalls ein fester mikronährstoffhaltiger Dünger bekannt, als Nährstoffe ebenfalls Mangan und Bor enthalten sind. Hierbei ist ein typischer Gehalt von 150-8000 g Mangan pro 100 Kg Dünger, das heißt umgerechnet sind 0,15 bis 8% Mangan vorgesehen; der Borgehalt beträgt zwischen 1 und 7 %.

Spurennährstoffkombinationen auf Chelatbasis werden häufig als Lösung, d.h. in Gegenwart von Wasser hergestellt und anschließend z.B. durch Sprühtrocknung oder Eindampfkristallisation in gut wasserlösliche, rieselfähige Produkte überführt. Weniger aufwendig können feste Mehrspurennährstoffdünger durch Vermischen der wasserlöslichen Salze der Einzelkomponenten hergestellt werden. Allerdings können Nachteile dergestalt auftreten, daß sich diese Salzmischungen bei unterschiedlicher Dichte und Körnung der Komponenten entmischen oder Verbackungserscheinungen auftreten.

Eine gleichzeitige gezielte Versorgung mit Magnesium, Schwefel, Bor und Mangan wird mit den bekannten Düngern nicht erreicht, wie insbesondere die Zuckerrübe und Raps es erfordern.

Es ist die Aufgabe zu lösen, einen festen, lagerfähigen, gut wasserlöslichen Blattdünger und das Verfahren zu dessen Herstellung gemäβ Ansprüche 1 und 4 zu entwickeln, der auf Basis einer Magnesiumkomponente als Carrier eine gezielte Versorgung von Pflanzenkulturen mit dem Sekundärnährstoff Schwefel und gleichzeitig mit den Mikronährstoffen Mangan und Bor gewährleistet.

Erfindungsgemäß wird das sulfatische Salz des Magnesiums in Form des Heptahydrats, nämlich Bittersalz, als Träger eingesetzt. Gegenüber den bekannten Spurennährstoffdüngem wird die Sekundämährstoffkomponente aus einem Anteil von mindestens 80 % Bittersalz gebildet, was einem Sekundärnährstoffgehalt von mindestens 13 % MgO und 10,3 % S entspricht. Dabei wurde gefunden, daß die an sich einzelnen bekannten Spurennährstoffträger Borsäure (H₃BO₃) und Mangansulfat-Monohydrat (MgSO₄ · H₂O) sehr gut mit dem Mg-Carrier Bittersalz mischbar sind und die erfindungsgemäße Nährstoffkombination bei Gehalten im Mischprodukt von 13-15 % **MgO**, 0,5-6,5 % **Mn**, 0,5-3,5 % **B** sowie 10,3-14 % **S** ohne Rückstand in eine klare Lösung überführt werden kann.

Die maximalen Gehalte an B, Mn und S werden unter der Voraussetzung, daß Mn als Monosulfat und B als Borsäure vorliegen, nur erreicht, wenn der Maximalgehalt an MgO ca. 13 % beträgt, d.h. maximal 80 % der Komposition aus Bittersalz gebildet werden. Dabei kann die Konzentration der auszubringenden Lösung durch Zugabe von Wasser auf bis zu 10 %, vorzugsweise 3-7 % eingestellt werden.

Eine ausreichende Nährstoffversorgung kann schon durch eine Applikation gegeben sein, beziehungsweise durch Wiederholung erreicht werden, bei der ein Produkt mit 15 % **MgO**; ca. 1 % **B** und ca. 1 % **Mn** sowie 12,5 % **S** als 5 %-ige Lösung zum Einsatz kommt.

Zur Herstellung des mikronährstoffhaltigen Blattdüngers wird zunächst die Carrier-komponente Bittersalz in zur Einstellung des gewünschten Nährstoffgehaltes erforderlicher Menge in trockner, körniger, rieselfähiger Form vorgelegt und die entsprechenden trocknen, körnigen Spurennährstofflieferanten in den zur Einstellung der Nährstoffgehalte erforderlichen Mengen zudosiert und intensiv gemischt. Zur Herstellung des fertigen Blattdüngers in applizierbarer Form wird eine Menge der lagerfähigen, körnigen Düngerkomposition in einem Rührgefäß unter Zugabe der zur Einstellung der erforderlichen Konzentration notwendigen Wassermenge in eine klare, bodenkörperfreie, stabile Blattdüngerlösung überführt.

Die Erfindung wird anhand nachfolgender Ausführungsbeispiele näher spezifiziert.

### Beispiel 1:

Es werden ca. 18,3 kg Bittersalz mit 0,6 kg Mangansulfathydrat und 1,1 kg Borsäure gemischt und in einem Rührgefäß unter Zugabe von Wasser in eine 5 %ige klare, bodenkörperfreie Blattdüngerlösung überführt. Es entstehen 400 l Düngerlösung, die entsprechend nachfolgender Düngungsempfehlung pro Hektar landwirtschaftliche Nutzfläche ausgebracht werden.

**Nährstoffgehalte: 15 % MgO, 12,5 % S, 0,95 % B, 0,95 % Mn**

| Empfehlung zur Blattdüngung von Zuckerrüben bei ausreichender Bodenversorgung (Stufe C) | | mit dem Produkt werden ausgebracht (bei 400 I/ha in 5 %iger Konzentration) |
|---|---|---|
| MgO | 2 - 3 kg/ha | 3,00 kg |
| S | 2 - 3 kg/ha | 2,50 kg |
| B | 0.1-0,2 kg/ha | 0,19 kg |
| Mn | 0 - 0,2 kg/ha | 0,19 kg |

### Beispiel 2:

Die Blattdüngerlösung gemäß Beispiel 1 kann bei Mangelsymptomen an der Pflanze (Zuckerrübe) in mehreren Teilgaben ausgebracht werden.

| Bei Mangel im Boden (Stufe A) oder sichtbaren Mangelsymptomen an Pflanzen und Zuckerrübe | | mit dem Produkt werden ausgebracht (bei 400 I/ha in 5 %iger Konzentration) |
|---|---|---|
| MgO | 4 -10 kg/ha | 9,00 kg |
| S | 4 -10 kg/ha | 7,50 kg |
| B | 0,4 -1,2 kg/ha | 0,57 kg |
| Mn | 1 - 2 kg/ha | 0,57 kg |
| in mehreren Teilgaben auszubringen | | bei 3maliger Applikation |

### Beispiel 3:

Es werden ca. 15,9 kg Bittersalz mit 4,1 kg Borsäure gemischt und entsprechend Beispiel 1 und 2 unter Zugabe von Wasser in eine 5 %ige Blattdüngelösung überführt.

**Nährstoffgehalte: 13 % MgO, 10,3 % S, 3,5 % B**

| Bei Bor-Mangel an Zuckerrübe | | mit dem Produkt werden ausgebracht (bei 400 I/ha in 5 %iger Konzentration) |
|---|---|---|
| MgO | 2 - 3 kg/ha | 2,60 kg |
| S | 2 - 3 kg/ha | 2,06 kg |
| B | 0,4 -1,2 kg/ha | 0,70 kg |

### Beispiel 4:

Es werden ca. 18,3 kg Bittersalz mit 1,7 kg Mangansulfathydrat gemischt und entsprechend vorstehender Beispiele unter Zugabe von Wasser in eine 5 %ige Blattdüngerlösung überführt.

Nährstoffgehalte: 15 % MgO, 13,5 % S, 2,7 % Mn

| Bei Mn-Mangel von Getreide | | mit dem Produkt werden ausgebracht (bei 400 I/ha in 5 %iger Konzentration) |
|---|---|---|
| MgO | 2 - 3 kg/ha | 3,00 kg |
| S | 2 - 3 kg/ha | 2,70 kg |
| Mn | 0,4 - 2,0 kg/ha | 0,54 kg |

## Patentansprüche

1. Mikronährstoffhaltiger Blattdünger auf Basis von Magnesiumsulfat, unter alleiniger Zumischung von Mangansulfat-Monohydrat und Borsäure, wobei das Mangansulfat-Monohydrat mit einem Nährstoffgehalt von 0,5 bis 6,5 % Mn und die Borsäure mit einem Nährstoffgehalt von 0,5 bis 3,5 %B eingesetzt wird,
**dadurch gekennzeichnet,**
**dass** als Carrier Bittersalz in Mengen von ≥ 80 % eingesetzt wird, wobei sich eine feste Nähstoffkombination mit 13 bis 15 %MgO und 10,3 bis 14 % S einstellt.

2. Mikronährstoffhaltiger Blattdünger nach Anspruch 1
**dadurch gekennzeichnet,**
**dass** die feste Nährstoffkombination durch Zugabe von Wasser in eine rückstandsfreie, klare Lösung mit einer Konzentration von bis zu 10 % überführt und appliziert wird.

3. Mikronährstoffhaltiger Blattdünger nach Anspruch 2
**dadurch gekennzeichnet,**
**dass** die Lösung vorzugsweise in einer Konzentration von 3 bis 7 % appliziert wird.

4. Verfahren zur Herstellung des mirkronährstoffhaltigen Blattdüngers nach Ansprüchen 1 bis 3
**dadurch gekennzeichnet,**
**dass** in einem Mischer die Carrier-komponente Bittersalz in zur Einstellung des gewünschten Nährstoffgehaltes erforderlicher Menge in trockner, körniger, rieselfähiger Form vorgelegt und die entsprechenden trocknen, körnigen Spurennährstofflieferanten in den zur Einstellung der Nährstoffgehalte erforderlichen Mengen zudosiert und intensiv gemischt werden und eine Menge der entstehenden lagerfähigen Düngerkomposition in einem Rührgefäß unter Zugabe der zur Einstellung der erforderlichen Konzentration notwendigen Wassermenge in eine klare, bogenkörperfreie, stabile Blattdüngerlösung überführt wird.

## Claims

1. A micronutrient-containing foliar fertilizer on the basis of magnesium sulfate, with the sole admixture of manganese sulfate monohydrate and boric acid, whereby the manganese sulfate monohydrate is applied with a nutrient content of 0.5 to 6.5 percent Mn and boric acid with a nutrient content of 0.5 to 3.5 percent B,
**wherein**
Epsom salt is applied as a carrier in amounts of ≥ 80 percent, whereby a solid nutrient combination of 13 to 15 percent MgO and 10.3 to 14 percent S is obtained.

2. A micronutrient-containing foliar fertilizer according to Claim 1,
**wherein**
the solid nutrient combination is converted by the addition of water into a residue-free, clear solution in a concentration of up to 10 percent and applied as such.

3. A micronutrient-containing foliar fertilizer according to Claim 2,
**wherein**
the solution is preferentially applied in a concentration of 3 to 7 percent.

4. Method for the manufacture of the micronutrient-containing foliar fertilizer according to Claims 1 to 3,
**wherein**
the necessary amount of the Epsom salt carrier component is transferred in a dry, granular and free-flowing form into a mixer, the accordingly dry, granular trace nutrient suppliers are added in amounts which are necessary to adjust the nutrient contents, thoroughly mixed, and an amount of the resulting storable fertilizer composition is transformed into a clear, sediment-free, stable foliar fertilizer solution in a mixing vessel while the water amounts necessary for the adjustment of the required concentrations are added.

## Revendications

1. Engrais foliaires contenant des micro-éléments nutritifs à base de sulfate de magnésium, obtenus par mélange du sulfate de manganèse monohydraté et de l'acide borique, avec une teneur en micro-éléments allant de 0,5 jusqu'à 6,5 % de manganèse dans le sulfate de manganèse monohydraté et de 0,5 jusqu'à 3,5 % de bore dans l'acide borique.
**Caractérisés en ce que**,
l'utilisation d'une quantité de sel d'Epsom comme support ≥ à 80 %, donnant ainsi un mélange à consistance solide avec des proportions de 13 à 15 % d'oxyde de magnésium MgO et de 10,3 à 14 % de soufre.

2. Engrais foliaires contenant des micro-éléments nutritifs selon la revendication 1
**Caractérisés en ce que**,
la dissolution du complexe solide d'éléments nutritifs dans de l'eau s'effectue pour obtenir une solution claire et sans résidus avec une concentration allant jusqu'à 10%.

3. Engrais foliaires contenant des micro-éléments nutritifs selon la revendication 2
**Caractérisés en ce que**,
l'application de la solution s'effectue de préférence à des concentrations allant de 3à7%.

4. Procédé de fabrication d'engrais foliaires contenant des micro-éléments nutritifs selon les revendications 1 à 3
**Caractérisé en ce que**,
les composants support de sel d'Epsom secs, granulés ayant des propriétés d'écoulement et servant à ajuster la concentration des éléments nutritifs nécessaires, sont déposés dans un mélangeur, les traces d'éléments nutritifs secs et granulaires correspondants sont ajoutés tout en ajustant la quantité désirée en éléments nutritifs nécessaires. Le tout est bien mélangé et dosé afin d'obtenir une quantité d'engrais nutritif ayant une composition stable pour le stockage.
La composition d'engrais est ensuite mise dans un récipient de barbotage à laquelle est ajoutée une quantité d'eau nécessaire afin d'obtenir une solution d'engrais limpide, sans particules à la concentration requise.
